# NOUVEAU FASCICULE DE BREVET EUROPEEN

(11) **EP 0 672 342 B2**
(45) Date de publication et mention de la décision concernant l'opposition: **06.03.2002**
(45) Mention de la délivrance du brevet: 20.01.1999
(21) Numéro de dépôt: 95400471.9
(22) Date de dépôt: 03.03.1995
(51) Int. Cl.: A01G 9/12

(54) **Retombée de bac ou de jardinière**
Herabhängende Stütze für einen Blumenkasten
Hanging support for a window box

(30) Priorité: 10.03.1994 FR 9402785
(43) Date de publication de la demande: 20.09.1995
(73) Titulaire: Gillet, Roger, F-91240 Saint Michel sur Orge (FR); Gaudru, épouse Gillet, Martine, F-91240 Saint Michel sur Orge (Essonne) (FR)
(72) Inventeur: Gillet, Roger, F-91240 Saint Michel sur Orge (FR); Gaudru, épouse Gillet, Martine, F-91240 Saint Michel sur Orge (Essonne) (FR)
(74) Mandataire: Cabinet HERRBURGER

(56) Documents cités:
- DE-A- 3 032 394
- DE-A- 3 439 838

## Description

La présente invention concerne un élément en treillage formant une retombée pour plantes en bac ou en jardinière.

Les plantes mises en bac ou en jardinière retombent directement sur les bords de ceux-ci.

Les parties se trouvant à la base des plantes sont en contact avec le terreau et subissent une altération et un phénomène de pourrissement consécutifs à ce contact.

Les rameaux majeurs ou secondaires frottant sur les rebords des bacs ou jardinières subissent des chancres qui les fragilisent et les rendent cassants lors de facteurs favorisants tels que le vent ou les manipulations humaines.

Les plantes retombent verticalement en se recourbant directement sur le bord du bac ou de la jardinière en allant du hautvers le bas, les rameaux s'entremêlant les uns aux autres d'une façon anarchique sans pour autant prendre de volume, ce qui crée des étouffements et des anémies.

Suite à ces facteurs, un handicap est certain au niveau de l'épanouissement de la plante.

On connaît déjà par la demande de brevet en Allemagne DE 3032394 un dispositif de maintien des fleurs d'une jardinière ou d'un bac destiné à maintenir les fleurs malgré le vent et à éviter qu'elles se cassent en se pliant sur le rebord du bac. Ce dispositif se compose d'un panneau plein qui est planté à l'intérieur du bac le long de l'un de ses bords et dont l'extrémité supérieure se prolonge au-dessus du bord du bac, ce prolongement étant ondulé et recourbé vers l'extérieur.

Ce dispositif agit cependant uniquement comme un prolongateur du bord du bac et il ne permet pas aux plantes, lors de leur croissance, de s'accrocher efficacement au dispositif.

L'invention permet de remédier à ces inconvénients.

Elle concerne à cet effet un élément destiné à être fixé sur le rebord d'un bac ou d'une jardinière par la culture de plantes retombantes caractérisé en ce qu'il est constitué par un treillage dont le fil comporte une prolongation en forme de U définissant de moyens permettant son autofixation sur le rebord du bac ou de la jardinière, ce treillage formant une retombée de forme arrondie à sa partie supérieure et se prolongeant extérieurement par une descente plane destinée à être maintenue sensiblement parallèlement à la face extérieure du bac ou de la jardinière en en étant écartée.

Tout au long de sa courbe en arc de cercle et de sa redescente, le treillage respecte un écartement par rapport au bord et à la face externe du bac ou de la jardinière.

Un autre modèle de fixation du treillage de la retombée consiste en un fil soudé à la base du treillage en étant à l'horizontale par rapport au treillage et que l'on pose directement sur le bord du bac ou de la jardinière en le resserrant en forme de cavalier sur la face interne et externe du bac ou de la jardinière. Avec ce mode de fixation la plante n'est prise en charge que dans sa phase de retombée.

Le treillage est constitué d'un maillage progressif.

Les dessins annexés illustrent l'invention :
- la figure 1 représente la retombée vue de face positionnée sur un bac ou une jardinière,
- la figure 2 est une vue en coupe transversale de la figure 1,
- la figure 3 est une coupe transversale d'un autre mode de réalisation de coupe de la retombée.

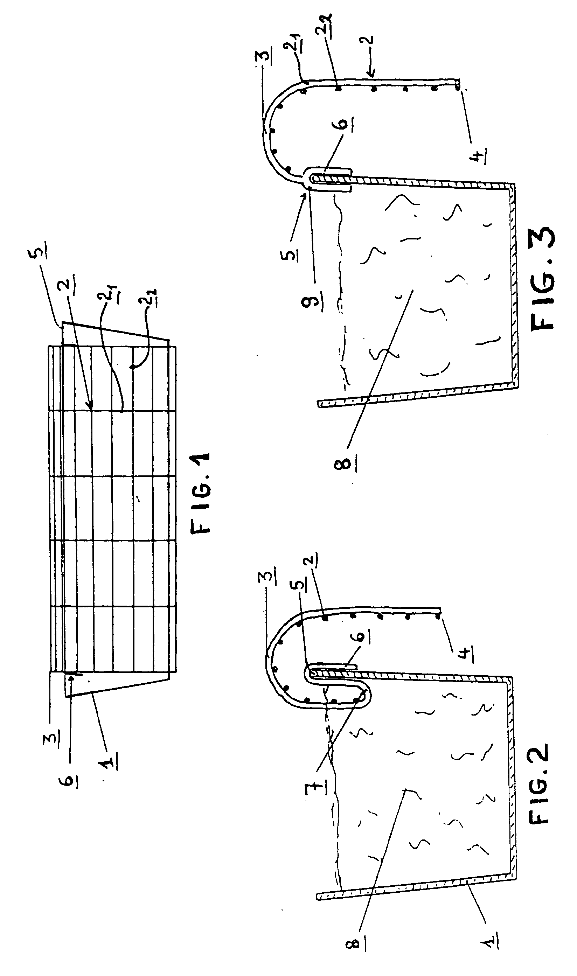

L'élément représenté sur les figures 1 et 2 se compose d'un treillage 2 destiné à se fixer sur le bord d'un bac ou d'une jardinière 1, ce treillage étant réalisé en matériau quelconque tel que de l'acier galvanisé ou non, peint ou plastifié, en matière plastique moulé, en résine, etc.

Suivant cet exemple, il se compose de fils longitudinaux 2₁ régulièrement répartis, sur lesquels sont soudés des fils transversaux 2₂ afin de former des mailles rectangulaires.

Ce treillage 2 réalisé en matériau semi-rigide et donc déformable plastiquement, se prolonge par tout ou partie de ces fils longitudinaux 2₁ et de préférence par ses deux fils latéraux 2₁ situés à l'extérieur du treillage afin de se replier en forme de U 6 sur le rebord du bac 1 et constituer ainsi une pince semi-rigide assurant l'auto-fixation correcte du treillage.

Le treillage 7 se prolonge alors à l'intérieur du bac ou de la jardinière, de façon à redescendre tout d'abord dans la terre 8 de ce bac sous la forme d'un coude puis à remonterau-dessus de la terre de ce bac et à distance du rebord 5 pour former une retombée arrondie 3 et enfin à redescendre en 4 à l'extérieur du bac. Le treillage est ainsi auto-fixé sur le rebord du bac par les prolongations en U 6 des fils longitudinaux 2₁ du treillage, ce treillage étant disposé à distance de la paroi latérale du bac du fait du coude 7 et de l'arrondi 3 afin d'éloigner les plantes de la paroi du bac tant intérieurement qu'extérieurement.

De préférence, ce treillage 2 est conçu avec un maillage de treillis aux dimensions progressives, les mailles de ce treillis étant plus petites dans la zone supérieure arrondie 3 de l'élément et s'élargissant progressivement dans la zone de descente extérieure 4 sensiblement parallèle à la face de la jardinière et du bac.

Suivant l'exemple de réalisation de la figure 3, les fils 6 constituant la prolongation des fils longitudinaux latéraux 2₁ du treillis comportent un fil 9, soudé, se plaçant initialement à l'horizontale au-dessus de la terre du bac pour se rabattre, du fait de sa plasticité, sous forme d'un cavalier, sur le rebord de ce bac. Dans ce cas, le treillage 2 remonte directement au-dessus du rebord 5 du bac pourformer l'arrondi 3 puis la descente extérieure 4 sensiblement parallèle à la face de la jardinière ou du bac.

Suivant les exemples représentés, les fils longitudinaux 2₁ sont parallèles et les fils transversaux sont rectilignes et parallèles. L'élément est alors destiné à des bacs rectilignes.

Suivant un autre mode de réalisation, les fils transversaux 2₂ seront cintrés et les fils longitudinaux seront placés suivant une disposition rayonnée afin de réaliser un élément pouvant être mis en oeuvre sur des vasques de forme circulaire.

Suivant l'invention, la retombée présente des avantages et favorise la croissance de la plante.

La retombée prend la plante en charge au fur et à mesure de sa croissance, elle évite que les tiges et les rameaux subissent des altérations dues à des moisissures par contact avec le sol.

La retombée permet une meilleure aération de la base de la plante et favorise son développement.

La retombée guide la plante à son démarrage en la remontant de quelques centimètres, lui permettant de commencer à s'étaler et à s'étoffer dans les mailles du treillage, lui faisant épouser un arc de cercle au fur et à mesure de sa croissance. Les tiges passant au travers des mailles commencent à prendre du volume.

Lors de la redescente de la plante, l'espace intérieur entre le maillage de la retombée et la face extérieure du bac ou de la jardinière reste accessible à toute évolution de croissance, le même développement intervient également vers l'extérieur du treillage favorisant le plein épanouissement de la plante, lui donnant un maximum de volume.

La retombée joue également le rôle de support, de répartition de poids et de maintien en cas de vent Elle évite que les tiges des plantes ne se balancent dans le vide et ne se cassent.

La retombée évite le chancre de la plante dû au frottement sur le bord du bac ou de la jardinière, facteur fragilisant des rameaux entraînant la rupture.

## Revendications

1. Elément destiné à être fixé sur le rebord d'un bac ou d'une jardinière pour la culture de plantes retombantes,
**caractérisé en ce qu'**
il est constitué par un treillage (2) dont le fil comporte une prolongation en forme de U (6) définissant des moyens permettant son auto fixation sur le rebord (5) du bac ou de la jardinière (1), ce treillage formant une retombée de forme arrondie (3) à sa partie supérieure et se prolongeant extérieurement par une descente plane (4) destinée à être maintenue sensiblement parallèlement à la face extérieure du bac ou de la jardinière (1) en en étant écartée.

2. Elément suivant la revendication 1,
**caractérisé en ce que**
le treillage (2) est réalisé en un matériau semi-rigide déformable plastiquement dont au moins une partie des fils longitudinaux (2₁) comporte une prolongation en forme de U (6) constituant une pince semi-rigide définissant les moyens permettant l'auto fixation du treillage (2) sur le rebord (5) du bac ou de la jardinière (1).

3. Elément suivant la revendication 2,
**caractérisé en ce qu'**
à partir de la pince semi-rigide (6) le treillage (2) se prolonge sous la forme d'un coude (7) destiné à redescendre dans la terre (8) du bac ou de la jardinière (1) avant de remonter au-dessus de cette terre et à distance du rebord (5) du bac ou de la jardinière (1) pour former la retombée arrondie (3) puis la descente extérieure (4).

4. Elément selon la revendication 1,
**caractérisé en ce que**
les fils (9) permettant l'obtention de la prolongation en forme de U (6) sont des fils soudés sur les fils longitudinaux (2₁) du treillage (2) destinés à se rabattre en forme de cavaliers sur le rebord (5) du bac ou de la jardinière (1).

5. Elément selon l'une quelconques des revendications 1 à 4,
**caractérisé en ce qu'**
il est réalisé en un treillage soudé.

6. Elément suivant l'une quelconque des revendications 1 à 5,
**caractérisé en ce qu'**
le treillage (2) est conçu avec un maillage aux dimensions progressives.

7. Elément suivant la revendication 6,
**caractérisé en ce que**
les mailles du treillage (2) sont plus petites dans la zone de la retombée de forme arrondie (3) de l'élément et s'élargissent progressivement dans la zone de la descente plane (4).

## Patentansprüche

1. Element, das für die Befestigung an dem Rand eines Troges oder eines Blumenkastens zum Kultivieren von Hängepflanzen bestimmt ist, **dadurch gekennzeichnet, dass** dieses Element aus einem Gitterwerk (2) gebildet ist, dessen Draht eine U-förmige Verlängerung (6) aufweist, welche die Mittel bildet, die die selbsthaltende Befestigung des Gitterwerks an dem Rand (5) des Troges oder des Blumenkastens (1) ermöglichen, wobei dieses Gitterwerk in seinem oberen Bereich eine gerundete Kantenüberwölbung (3) bildet und sich nach außen durch eine eben abfallende Fläche (4) verlängert, die unter Beabstandung von der Außenfläche des Troges oder des Blumenkastens (1) im wesentlichen parallel zu dieser gehalten wird.

2. Element nach Anspruch 1, **dadurch gekennzeichnet, dass** das Gitterwerk (2) aus einem plastisch verformbaren halbstarren Material gebildet ist, wovon zumindest ein Teil der Längsdrähte (2₁) eine U-förmige Verlängerung (6) aufweisen, die eine halbstarre Klemme bilden als Mittel zur Ermöglichung der selbsthaltenden Befestigung des Gitterwerks (2) an dem Rand (5) des Troges oder des Blumenkastens (1).

3. Element nach Anspruch 2, **dadurch gekennzeichnet, dass** sich das Gitterwerk (2) ausgehend von der halbstarren Klemme (6) in Form eines Knies (7) verlängert, welches sich zurück in die Erde (8) des Troges oder des Blumenkastens (1) erstreckt, ehe es sich mit einem Abstand von dem Rand (5) des Troges oder des Blumenkastens (1) wieder nach oben über diese Erde erstreckt, um die gerundete Kantenüberwölbung (3) und schließlich die nach unten abfallende Außenfläche (4) zu bilden.

4. Element nach Anspruch 1, **dadurch gekennzeichnet, dass** die Drähte (9), die die U-förmige Verlängerung (6) ermöglichen, an die Längsdrähte (2₁) des Gitterwerks (2) geschweißte Drähte sind, die sich krampenförmig um den Rand (5) des Troges oder des Blumenkastens (1) herumlegen.

5. Element nach einem der Ansprüche 1 bis 4, **dadurch gekennzeichnet, dass** dieses als Schweißgitter ausgebildet ist.

6. Element nach einem der Ansprüche 1 bis 5, **dadurch gekennzeichnet, dass** das Gitterwerk (2) mit sich fortschreitend vergrößernden Maschen konfiguriert ist.

7. Element nach Anspruch 6, **dadurch gekennzeichnet, dass** die Maschen des Gitterwerks (2) im Bereich der gerundeten Kantenüberwölbung (3) des Elements kleiner sind und dass sie in dem Bereich der eben abfallenden Fläche (4) zunehmend größer werden.

## Claims

1. Element intended to be fixed to the rim of a tub or a window box for growing hanging plants, **characterised in that** it comprises a trellis work (2) whose wire comprises a U-shaped extension (6) which defines means allowing the self-attachment thereof to the rim (5) of the tub or window box (1), the trellis work forming a hanging portion of rounded shape (3) in its upper portion and extending externally with a flat descending portion (4) which is intended to be maintained substantially parallel with the outer face of the tub or the window box (1) and with spacing therefrom.

2. Element according to claim 1, **characterised in that** the trellis work (2) is in the form of a resiliently deformable semi-rigid material, of which at least some of the longitudinal wires (2₁) comprise a U-shaped extension (6) which constitutes a semi-rigid gripping member which defines the means allowing self-attachment of the trellis work (2) to the rim (5) of the tub or the window box (1).

3. Element according to claim 2, **characterised in that**, starting from the semi-rigid gripping member (6), the trellis work (2) extends in the form of an elbow (7) which is intended to descend into the earth (8) of the tub or the window box (1) before ascending above the earth and with spacing from the rim (5) of the tub or window box (1) in order to form the rounded hanging portion (3) and then the outer descending portion (4).

4. Element according to claim 1, **characterised in that** the wires (9) which allow the U-shaped extension (6) to be obtained are wires which are soldered to longitudinal wires (2₁) of the trellis work (2) which are intended to be bent over in the form of clips on the rim (5) of the tub or the window box (1).

5. Element according to any one of claims 1 to 4, **characterised in that** it is in the form of a soldered trellis work.

6. Element according to any one of claims 1 to 5, **characterised in that** the trellis work (2) is designed with meshing having progressively wider dimensions.

7. Element according to claim 6, **characterised in that** the meshes of the trellis work (2) are smaller in the region of the hanging portion of rounded shape (3) of the element and become progressively wider in the region of the flat descending portion (4).
